# EUROPÄISCHE PATENTANMELDUNG

(11) **EP 4 848 531 A1**
(43) Veröffentlichungstag der Anmeldung: **02.12.2026**
(21) Anmeldenummer: 26177799.9
(22) Anmeldetag: 11.05.2026
(51) Int. Cl.: H02J 7/70, H02J 7/80

(54) **LADEGERÄT ZUR LADUNG MINDESTENS EINES WIEDERAUFLADBAREN ENERGIESPEICHERS**

(30) Priorität: 30.05.2025 DE 102025121278
(71) Anmelder: Robert Bosch GmbH, 70442 Stuttgart (DE)
(72) Erfinder: Osswald, Alexander, 70599 Stuttgart (DE); Koller, Torsten, 70771 Leinfelden-Echterdingen (DE); Volz, Patrick, 70563 Stuttgart (DE); Koegel, Jan, 86441 Zusmarshausen (DE)

(57) **Zusammenfassung**

Die Erfindung betriff ein Ladegerät (10) zur Ladung mindestens eines wiederaufladbaren Energiespeichers (12), mit einem Gehäuse (20), in dem eine Steuer- oder Regelelektronik (26) zur Steuerung oder Regelung eines Ladevorgangs des wiederaufladbaren Energiespeichers (12) und eine Ausgabeeinheit (32) zur haptischen, akustischen und/oder optischen Anzeige zumindest eines Ladeparameters (L_{P}) des Ladevorgangs aufgenommen sind. Es wird vorgeschlagen, dass in dem Gehäuse (20) eine Sensoreinheit (46) zur Erfassung einer Bewegung und/oder Lage des Ladegeräts (10) und/oder einer auf das Ladegerät (10) ausgeübten Kraft aufgenommen ist, wobei die Steuer- oder Regelelektronik (26) den Ladevorgang und/oder die Ausgabeeinheit (32) in Abhängigkeit von der durch die Sensoreinheit (46) erfassten Bewegung, Lage und/oder Kraft beeinflusst.

## Beschreibung

Die Erfindung betrifft ein Ladegerät zur Ladung mindestens eines wiederaufladbaren Energiespeichers nach der Gattung des unabhängigen Anspruchs.

### Stand der Technik

Zur Ladung wiederaufladbarer Energiespeicher für batteriebetriebene Elektrogeräte sind in der Regel speziell ausgestaltete Ladegeräte vorgesehen, die ein Gehäuse mit einer elektromechanischen Schnittstelle zur lösbaren Aufnahme einer entsprechenden, elektromechanischen Gegenschnittstelle des wiederaufladbaren Energiespeichers aufweisen. Mittels einer in dem Gehäuse angeordneten Steuer- oder Regelelektronik kann ein Ladevorgang des wiederaufladbaren Energiespeichers durch die Steuerung oder Regelung einer Leistungselektronik beeinflusst werden. Ferner weisen derartige Ladegeräte in der Regel an oder im Gehäuse eine Ausgabeeinheit zur haptischen, akustischen und/oder optischen Anzeige zumindest eines Ladeparameters des Ladevorgangs auf. Eine derartige Ausgabeeinheit ist beispielsweise als eine LED-Anzeige, als ein berührungssensitives oder nicht berührungssensitives Display (LC, TFT, OLED, E-Paper, etc.), aber auch als ein Lautsprecher bzw. Summer oder ein Vibrationsaktor ausgebildet. Mittels einer Bedieneinheit des Ladegeräts kann der Bediener den Ladevorgang beeinflussen. Eine derartige Bedieneinheit ist häufig als ein oder mehrere Taster ausgebildet, die sich direkt am Gehäuse des Ladegeräts befinden.

Aus der AU 2021 258 075 A1 geht ein Ladegerät für einen wiederaufladbaren Energiespeicher in Gestalt eines Wechselakkupacks für eine Handwerkzeugmaschine hervor, wobei das Ladegerät ein Gehäuse aufweist, in dem eine Steuer- oder Regelelektronik zur Steuerung oder Regelung des Ladevorgangs aufgenommen ist. Fener weist das Ladegerät einen Temperatursensor zur Messung einer Temperatur im Ladegerät auf, in deren Abhängigkeit die Steuer- oder Regelelektronik den Ladevorgang beeinflusst.

Die EP 3 200 313 A1 offenbart einen Adapter für eine akkubetriebene Handwerkzeugmaschine, ein Ladegerät und/oder einen Wechselakkupack mit entsprechenden elektromechanischen Schnittstellen zur lösbaren Befestigung sowie mit einer Sensoreinheit, die eine Vielzahl unterschiedlicher Sensoren, insb. einen Beschleunigungssensor, einen Temperatursensor, eine Kamera, ein Mikrophon oder dergleichen, aufweist. Der Adapter weist ferner eine bidirektionale Funkschnittstelle zur drahtlosen Kommunikation mit einem externen Gerät auf. Mittels des Beschleunigungssensors können unterschiedliche Bewegungsmuster erfasst und über die Funkschnittstelle zur Einstellungen diverser Parameter der Handwerkzeugmaschine an das externe Gerät übertragen werden.

Es ist Aufgabe der Erfindung, ein Ladegerät bereitzustellen, das gegenüber Ladegeräten nach dem Stand der Technik eine vereinfachte und/oder flexiblere Bedienung ermöglicht.

### Offenbarung der Erfindung

Zur Lösung der obigen Aufgabe ist vorgesehen, dass in dem Gehäuse des Ladegeräts eine Sensoreinheit zur Erfassung einer Bewegung und/oder Lage des Ladegeräts und/oder einer auf das Ladegerät ausgeübten Kraft aufgenommen ist, wobei die Steuer- oder Regelelektronik den Ladevorgang und/oder die Ausgabeeinheit in Abhängigkeit von der durch die Sensoreinheit erfassten Bewegung, Lage und/oder Kraft beeinflusst. Mit besonderem Vorteil kann ein Bediener des Ladegeräts ohne eine zusätzliche Betätigung einer Bedieneinheit einen Lade- und/oder Anzeigevorgang interaktiv auslösen. Somit ist es nicht erforderlich, stets eine gute Sicht auf die Bedieneinheit mit einer ggf. komplexen Menüführung zu haben, was die Wahrscheinlichkeit von Fehleingaben verringert. Zudem können Kosten und Qualitätsprobleme von Tastern und Schaltern verringert oder vermieden werden und es besteht aufgrund moderner Sensoreinheiten mit insbesondere MEMS-Sensoren (Micro-Electro-Mechanical Systems) die Möglichkeit eines sehr kompakten Aufbaus, der die mechanische Komplexität des Ladegeräts reduziert.

Unter einem batteriebetriebenen Elektrogerät soll beispielsweise eine akkubetriebene Werkzeugmaschine zur Bearbeitung von Werkstücken mittels eines elektrisch angetriebenen Einsatzwerkzeugs verstanden werden. Dabei kann die akkubetriebene Werkzeugmaschine sowohl als Handwerkzeugmaschine als auch als stationäre Werkzeugmaschine ausgebildet sein. Typische Werkzeugmaschinen sind in diesem Zusammenhang Hand- oder Standbohrmaschinen, Schrauber, Schlagbohrmaschinen, Hobel, Winkelschleifer, Schwingschleifer, Poliermaschinen oder dergleichen. Als batteriebetriebene Elektrogeräte kommen aber auch Garten- und Baugeräte wie Rasenmäher, Rasentrimmer, Astsägen, Motor- und Grabenfräsen, Gebläse, Roboter-Breaker und -Bagger oder dergleichen, sowie Messgeräte, wie Laser-Entfernungsmesser, Wandscanner, etc., in Frage. Weiterhin ist die Erfindung auf Ladegeräte zum Laden wiederaufladbarer Energiespeicher für batteriebetriebene Haushaltgeräte, wie Staubsauger, Mixer, etc., und elektrisch angetriebene Zweiräder, wie z.B. E-Bikes, E-Scooter, Pedelecs, etc. anwendbar.

Die hier beschriebenen, wiederaufladbaren Energiespeicher für batteriebetriebenen Elektrogeräte sind vorzugsweise als Wechselakkupacks ausgebildet und weisen ein Gehäuse auf, das über eine elektromechanische Schnittstelle kraft- und/oder formschlüssig lösbar mit dem batteriebetriebenen Elektrogerät zum Entladen oder mit dem Ladegerät zum Aufladen verbindbar ist. Des Weiteren umfassen die elektromechanischen Schnittstellen jeweils eine Mehrzahl elektrischer Kontaktelemente, über die zumindest eine Akkuzelle des Akkupacks mit dem batteriebetriebenen Elektrogerät oder dem Ladegerät elektrisch verbindbar ist. Die Akkuzelle kann als eine galvanische Zelle ausgebildet sein, die einen Aufbau mit einem ersten Zellpol an einem Ende und einem weiteren Zellpol an einem gegenüberliegenden Ende aufweist. Insbesondere weist die Akkuzelle an einem Ende einen positiven Zellpol und an einem gegenüberliegenden Ende einen negativen Zellpol auf. Bevorzugt sind die Akkuzellen als lithiumbasierte Akkuzellen, z.B. Li-Ion, Li-Po, LiMn, LFP oder dergleichen, ausgebildet. Die Erfindung ist aber auch auf NiCd-, NiMh-Zellen oder andere geeignete Zellenarten anwendbar.

Die Akkuspannung des Akkupacks ist in der Regel ein Vielfaches der Spannung einer einzelnen Akkuzelle und ergibt sich aus ihrer elektrischen Verschaltung (parallel oder seriell). Bei gängigen Li-lon-Akkuzellen mit einer Spannung von 3,6 V ergeben sich somit beispielhafte Batteriespannungen von 3,6 V, 7,2 V, 10, 8 V, 14,4 V, 18 V, 36 V etc. Bevorzugt ist die Akkuzelle als zumindest im Wesentlichen zylinderförmige Rundzelle ausgebildet, wobei die Zellpole an Enden der Zylinderform angeordnet sind. Die elektromechanische Schnittstelle umfasst insbesondere zumindest zwei elektrische Kontaktelemente, die zur Übertragung von Energie ausgebildet sind. Alternativ kann die elektromechanische Schnittstelle aber auch ein sekundäres Ladespulenelement zur induktiven Ladung aufweisen. Zusätzlich kann die elektromechanische Schnittstelle weitere Kontaktelemente aufweisen, die dazu ausgebildet sind, die den Ladevorgang charakterisierenden Parameter an das Elektrogerät und/oder das Ladegerät zu übertragen. Dabei kann es sich beispielsweise um einen Ladezustand des Akkupacks, eine Temperatur innerhalb des Akkupacks, eine Codierung, eine Restkapazität des Akkupacks oder dergleichen handeln.

Es sei angemerkt, dass die Erfindung nicht auf Ladegeräte für Wechselakkupacks beschränkt ist, sondern ohne Einschränkung auch auf Ladegeräte für batteriebetriebene Elektrogeräte mit fest integrierten Akkuzellen anwendbar ist. Der Begriff Akkupack soll daher als Synonym für Wechselakkupacks als auch für in einem Elektrogerät fest integrierte Akkuzellen verstanden werden. Weiterhin soll ein Einschieben des Akkupacks auch als ein Einstecken, Einsetzen oder als ein vergleichbarer kraft- und/oder formschlüssiger Verbindungsvorgang verstanden werden.

In einer Weiterbildung ist vorgesehen, dass der zumindest eine Ladeparameter eine Ladedauer, eine Ladeleistung, ein Lademodus, eine Ladeobergrenze oder eine Entladeuntergrenze ist. In vorteilhafter Weise kann der Bediener dadurch Einfluss auf für den Ladevorgang relevante Parameter nehmen, um ihn an seine Bedürfnisse - zum Beispiel schnelles Laden, schonendes Laden, Laden bis zu einem bestimmten Füllstand - anzupassen.

Die Sensoreinheit weist zumindest einen Lage- und/oder Beschleunigungssensor und/oder einen Kraftsensor auf. Somit kann der Lade- und/oder Anzeigevorgang beispielsweise durch ein Verdrehen des Gehäuses, durch ein leichtes Klopfen und/oder das Ausüben einer Druckveränderung auf das Gehäuse oder die elektromagnetische Schnittstelle interaktiv ausgelöst werden.

Besonders bevorzugt umfasst die erfasste Bewegung ein definiertes Bewegungsmuster oder eine Erschütterung des Ladegeräts. Mittels unterschiedlicher Bewegungsmuster können in vorteilhafter Weise unterschiedliche Aktionen ausgelöst werden. Vordefinierte Bewegungsmuster und Erschütterung ermöglichen eine differenzierte Steuerung von Ladevorgängen und vermeiden ungewollte Reaktionen auf zufällige Bewegungen. So kann beispielswiese bei der Erfassung einer Pendelbewegung des Ladegeräts darauf geschlossen werden, dass dieses von einer Standfläche gefallen ist und nur noch durch das Netzkabel gehalten wird. Mittels einer Drehbewegung um eine der drei Achsen des Ladegeräts lassen sich zudem unterschiedliche Ladevorgänge auslösen, während eine längere Erschütterung zum Stoppen des aktuellen Ladevorgangs führt. In Abhängigkeit vom Bewegungsmuster lassen sich somit unterschiedliche Ladeparameter verändern und/oder anzeigen.

In einer Weiterbildung ist vorgesehen, dass die Steuer- oder Regelelektronik die Anzahl gleichartiger Bewegungsmuster erfasst, um den zumindest einen Ladeparameter des Ladevorgangs in Abhängigkeit von der erfassten Anzahl stufenweise zu ändern und über die Ausgabeeinheit anzuzeigen. Dies erlaubt eine feinere Anpassung der Ladeparameter und eine präzisere Steuerung des Ladevorgangs durch wiederholte Gesten. So können beispielsweise Informationen über den Ladestrom, den Ladezustand bzw. Füllgrad in mehreren Stufen angezeigt und/oder eingestellt werden, indem die Zahl der gleichartigen Drehbewegungen und/oder Erschütterungen ermittelt wird.

Ferner kann mittels der Steuer- oder Regelelektronik ein Zeitfenster derart definierbar werden, dass gleichartige Bewegungsmuster innerhalb des Zeitfensters eine Erhöhung ihrer Anzahl und außerhalb des Zeitfensters eine Reduzierung ihrer Anzahl oder die Veränderung eines anderen Ladeparameters bewirken. Die zeitliche Steuerung von Bewegungsmustern verhindert in vorteilhafter Weise eine Fehlinterpretationen der Gesten und ermöglicht komplexere Interaktionsmöglichkeiten.

Die erfasste Kraft kann durch den zumindest einen in die elektromechanische Schnittstelle des Ladegeräts eingeschobenen Energiespeicher erzeugt sein. Der Ladevorgang kann somit beispielsweise zusätzlich zum erkannten elektrischen Kontakt der elektrischen Kontaktelemente durch einen erkannten Kraftschluss des Akkupacks gestartet werden. Anhand des erkannten Gewichts des eingeschobenen Akkupacks lässt sich darüber hinaus auf dessen Kapazität schließen, um davon abhängig den Ladestrom zu beeinflussen.

Ergänzend oder alternativ startet die Steuer- oder Regelelektronik in Abhängigkeit von der erfassten Bewegung und/oder Kraft einen Aufweckvorgang des Ladegeräts aus dem Ruhebetrieb. Dies ermöglicht eine komfortable Nutzung, da keine separate Taste zum Aktivieren benötigt wird.

Bei Überschreiten eines ersten Schwellwertes durch die erfasste Bewegung und/oder bei Unterschreiten eines zweiten Schwellwertes durch die erfasste Kraft beendet, unterbricht oder reduziert die Steuer- oder Regelelektronik den Ladevorgang. So kann der Ladvorgang beispielsweise beendet oder unterbrochen werden, wenn das Ladegerät durch einen Bediener aufgenommen bzw. angehoben wird und der Akkupack noch in der elektromechanischen Schnittstelle eingeschoben ist, weil in diesem Fall durch die erfasste Bewegung der erste Schwellwert überschritten wird. Ebenso ist ein Beenden oder Unterbrechen des Ladevorgangs möglich, wenn das Ladegerät am Akkupack angehoben wird, weil dann der zweite Schwellwert durch die erfasste Kraft unterschritten und der erste Schwellwert durch die erfasste Bewegung überschritten wird. Zudem kann auch zunächst eine Reduzierung der Ladeleistung bewirkt werden, um dem Ladevorgang zu unterbrechen oder zu beenden, wenn sich am Überschreiten des ersten Schwellwertes und/oder am Unterschreiten des zweiten Schwellwertes innerhalb eines definierten Zeitfensters keine Veränderung ergeben hat. Mit besonderem Vorteil bietet sich hierdurch eine einfache und zuverlässige Sicherheitsfunktion durch eine Bewegungs- und Kraftmessung.

Die als optische Anzeige ausgebildete Ausgabeeinheit umfasst eine Mehrzahl optischer Segmente, die parallel zu zumindest einer Außenkante des Gehäuses angeordnet sind, wobei die Steuer- oder Regelelektronik die Segmente derart ansteuert, dass die Lage des Ladegeräts in Form einer digitalen Wasserwaage anzeigbar ist. Hierdurch ergibt sich eine zusätzliche Funktionalität des Ladegeräts, die in bestimmten Anwendungsszenarien nützlich sein kann.

Das Lagegerät weist eine Funkschnittstelle zur Datenkommunikation mit einem externen Gerät, wobei die Steuer- oder Regelelektronik in Abhängigkeit von der erfassten Bewegung und/oder Kraft einen Kommunikationsvorgang der Funkschnittstelle mit dem externen Gerät steuert. Somit können Informationen bezüglich des aktuellen Lademodus nebst weiterer Ladeparameter und -zustände interaktiv durch eine entsprechende Gestensteuerung über die Funkschnittstelle an das externe Gerät, wie beispielsweise ein Smartphone, ein Tablet, einen PC, Laptop oder dergleichen, übertragen werden. Die Funkschnittstelle kann beispielsweise als eine WLAN-, Bluetooth- oder Zigbee-Schnittstelle oder dergleichen ausgebildet sein. Ferner ist eine Unterbrechung der Funkverbindung mit oder ohne Latenzzeit nach einem Ausschieben des Akkupacks aus der elektromechanischen Schnittstelle des Ladegeräts denkbar. Über die Funkschnittstelle können in Abhängigkeit bestimmter erkannter Bewegungsmuster beispielsweise auch Smart-Home-Geräte gesteuert werden, die ihrerseits mit dem externen Gerät verbunden sind.

Ferner ist vorgesehen, dass die Steuer- oder Regelelektronik mittels der Sensoreinheit eine Beschleunigung des Ladegeräts erfasst und im Falle des Überschreitens eines dritten Schwellwertes in einem nichtflüchtigen Speicher ablegt und/oder einen Aktor zum Schutz des Ladegeräts auslöst. Somit kann eine Schutzfunktion bei starken Beschleunigungen, wie sie beispielsweise bei einem Sturz auftreten, ausgelöst werden. Bei Überschreiten des dritten Schwellwertes durch die erfasste Beschleunigung kann beispielsweise ein Airbag, ein Fallschirm oder dergleichen ausgelöst werden, um die Auswirkungen eines Sturzes zu mildern. Auf diese Weise ergibt sich ein wirksamer Schutz des Ladegeräts und des ggf. eingeschobenen Akkupacks vor Beschädigungen. Die Speicherung der Beschleunigungsdaten ermöglicht eine spätere Analyse derartiger Ereignisse zu Servicezwecken. Des Weiteren können die mechanische Schwingungen, die auf das Ladegerät einwirken aufgezeichnet werden, um einen Aufschluss über den mechanischen Stress zu erhalten. Mit Hilfe der gespeicherten Daten lassen sich die Ereignisse zählen und als Garantie- oder Servicefälle ermitteln. Die Erkennung eines freien Falls und ggf. dessen Dauer kann beispielsweise über einen triaxialen Beschleunigungssensors in der Sensoreinheit erfolgen. Daraus lässt sich die Fallhöhe ermitteln und ggf. speichern. Der Beschleunigungssensor kann ebenfalls einen Aufprall detektieren sowie dessen Stärke (in g oder m/s²) ausmessen und speichern. Bei der Verwendung eines Drucksensors kann ergänzend oder alternativ ein Aufprall durch die entstehende Druckwelle detektiert werden. Auch akustische Sensoren zur Aufpralldetektion sind denkbar.

Die elektromechanische Schnittstelle weist einen Aktor auf, der den zumindest einen eingeschobenen Energiespeicher im Falle des Überschreitens des dritten Schwellwerts aus der elektromechanischen Schnittstelle ausrückt. Dies bietet einen zusätzlichen Schutz des Akkupacks sowie der elektromechanischen Schnittstellen von Ladegerät und Akkupack durch ein mechanisches Trennen vom Ladegerät im Falle eines Sturzes oder ähnlichen Ereignissen.

Weiterhin kann in dem Gehäuse ein Lüfter zur Kühlung zumindest der Leistungselektronik angeordnet ist, wobei die Steuer- oder Regelelektronik den Lüfter in Abhängigkeit von einer erfassten Lage und/oder Bewegung des Ladegeräts ansteuert. So kann in einer standardmäßig horizontalen Lage des Ladegeräts eine Standard-Lüftung und in einer davon abweichenden, insb. senkrechten, Lage eine gegenüber der Standard-Lüftung verstärkte Lüftung umgesetzt werden. Dies ermöglicht eine optimierte Kühlung in Abhängigkeit von der Lage des Ladegeräts und verhindert eine Überhitzung, um die Lebensdauer des Ladegeräts und ggf. des eingeschobenen Akkupacks zu erhöhen. Weist die Sensoreinheit einen Feinstaub- oder Rauchsensor auf, kann zudem ein Verschmutzungsgrad innerhalb des Ladegeräts erfasst und mittels der Steuer- oder Regelelektronik überprüft werden.

### Zeichnung

Die Erfindung wird im Folgenden anhand der Figuren 1 bis 6 beispielhaft erläutert, wobei gleiche Bezugszeichen in den Figuren auf gleiche Bestandteile mit einer gleichen Funktionsweise hindeuten.

Es zeigen
- Fig. 1:: ein Ladegerät zum Aufladen eines wiederaufladbaren Energiespeichers für eine batteriebetriebene Handwerkzeugmaschine nach dem Stand der Technik,
- Fig. 2:: ein erstes Ausführungsbeispiel zur Ansteuerung eines erfindungsgemäßen Ladegeräts mittels unterschiedlicher Bewegungsmuster (Fig. 2a: linear, Fig. 2b: rotatorisch, Fig. 2c: Klopfen),
- Fig. 3:: ein zweites Ausführungsbeispiel zur Ansteuerung eines erfindungsgemäßen Ladegeräts mittels erkannter Erschütterungen,
- Fig. 4:: ein drittes Ausführungsbeispiel zur Ansteuerung eines Lüfters eines erfindungsgemäßen Ladegeräts in Abhängigkeit von der Lage des Ladegeräts,
- Fig. 5:: ein viertes Ausführungsbeispiel für die Nutzung eines erfindungsgemäßen Ladegeräts als digital Wasserwaage (Fig. 5a: durch Anlegen an ein Gehäusekante, Fig. 5b, 5c: zusätzliche oder alternative Anzeige über eine Smartphone-App),
- Fig. 6:: ein fünftes Ausführungsbeispiel zur Ansteuerung eines als Cradle-Lader ausgebildeten, erfindungsgemäßen Ladegeräts mittels unterschiedlicher Bewegungsmuster und
- Fig. 7:: ein sechstes Ausführungsbeispiel für die Ansteuerung eines alternativ ausgestalteten Cradle-Laders mittels unterschiedlicher Bewegungsmuster.

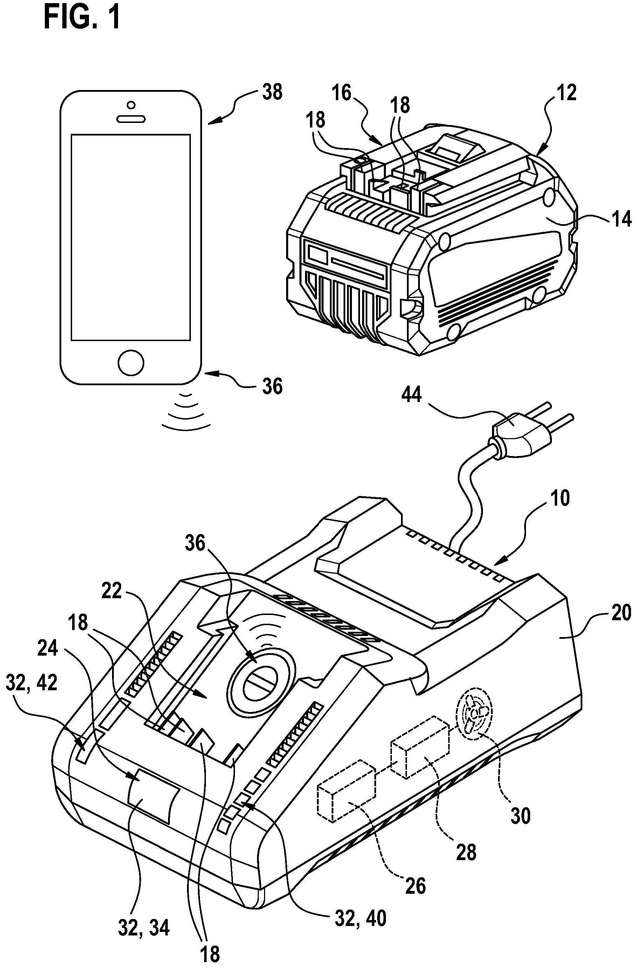

Figur 1 zeigt ein Ladegerät 10 zum Aufladen eines Wechselakkupacks 12 für eine nicht gezeigte, batteriebetriebene Handwerkzeugmaschine nach dem Stand der Technik. Dem Fachmann ist die Verwendung von Akkupacks für unterschiedliche Elektrogeräte, insbesondere Elektrowerkzeuge, hinlänglich bekannt, so dass hier nicht näher darauf eingegangen werden soll.

Der Wechselakkupack 12 weist ein Gehäuse 14 mit einer elektromechanischen Schnittstelle 16 auf, die zum Aufladen des Wechselakkupacks 12 über eine Mehrzahl elektrischer Kontaktelemente 18 in eine entsprechend komplementär ausgebildete, an einem Gehäuse 20 des Ladegeräts 10 angeordnete, elektromechanische Schnittstelle 22 eingeschoben wird, so dass eine Energieübertragung vom Ladegerät 10 zum Wechselakkupack 12 erfolgt. Gleichzeitig können über die Kontaktelemente 18 der elektromechanischen Schnittstellen 16, 22 Daten bzgl. der Ladeparameter L_{P}, wie Temperatur, Ladezustand, Restkapazität oder dergleichen, und/oder des Gesundheitszustands des Wechselakkupacks 12 übertragen werden. Dem Fachmann ist die Auslegung der elektromechanischen Schnittstellen 16, 22 sowie der elektrischen Kontaktelemente 18 zur elektrischen Versorgung der batteriebetriebenen Handwerkzeugmaschine einerseits und zum Aufladen des Wechselakkupacks 12 mittels des Ladegeräts 10 andererseits bekannt, so dass hierauf nicht weiter eingegangen werden soll, zumal dies für die Erfindung als solche ohne weitere Bedeutung ist. Weiterhin sei angemerkt, dass die Erfindung ohne Einschränkung auch auf kabellos, insbesondere induktiv, arbeitende Ladegeräte und Akkupacks anwendbar ist.

Mittels einer Bedieneinheit 24 lassen sich durch einen Bediener beispielsweise unterschiedliche Ladeparameter am Ladegerät 10 einstellen. Diese werden von einer Steuer- oder Regelelektronik 26 erfasst, die ihrerseits in Abhängigkeit vom eingestellten Lademodus eine Leistungselektronik 28 ansteuert. Mittels eines Lüfters 30 können die Leistungselektronik 28, die Steuer- oder Regelelektronik 26 und ggf. auch der eingeschobene Akkupack 12 über nicht gezeigte Luftleitkanäle innerhalb des Gehäuses 20 und der elektromechanischen Schnittstelle 22 des Ladegeräts 10 gekühlt werden. Die Steuer- oder Regelelektronik 26 kann als ein Mikroprozessor in Gestalt eines DSP, ASIC, FPGA oder dergleichen ausgestaltet sein. Statt integrierter digitaler Schaltkreise sind auch diskret aufgebaute und/oder analoge Schaltkreise denkbar. Die Leistungselektronik 28 umfasst vorzugsweise eine Mehrzahl von Leistungstransistoren in Form von MOSFETs, bipolaren Transistoren, IGBTs oder dergleichen. Da die Ausgestaltung der Steuer- oder Regelelektronik 26, der Leistungselektronik 28 und des Lüfters 30 für die Erfindung als solche keine nennenswerte Bedeutung hat und sie dem Fachmann hinlänglich bekannt ist, soll hierauf nicht weiter eingegangen werden.

Vorzugsweise kann zwischen einem "Standard"-Modus (in der Regel das CCCV-Ladeverfahren), einem "Boost"-Modus mit erhöhtem Ladestrom und sehr kurzer Ladezeit, einem "Long-Life"-Modus mit besonders geringem Ladestrom und sehr langer Ladezeit, einem "Storage"-Modus mit einer verringerten Ladespannung und verlängerter Ladezeit sowie einem "Flight"-Modus mit einem Ladestrom und einer Ladezeit entsprechend dem "Storage"-Modus aber demgegenüber verringerter Ladegrenze unterschieden werden. Die einzelnen Lademodi seien hier nur exemplarisch genannt und schränken die Erfindung nicht ein. Weiterhin dient die Bedieneinheit 24 als eine Ausgabeeinheit 32 für den aktuell eingestellten Lademodus über eine oder mehrere LEDs und/oder ein Display 34 mit unterschiedlichen Farben und/oder Blinkfrequenzen.

Über eine Funkschnittstelle 36 (z.B. Bluetooth, WLAN, NFC, Zigbee, LoRa, GSM, UMTS oder dergleichen) ist es dem Bediener alternativ oder ergänzend möglich, den Lademodus mittels eines externen Geräts 38 (z.B. Smartphone, Tablet, PC, Fernbedienung, etc.), das seinerseits eine entsprechende Funkschnittstelle 36 aufweist, umzuschalten. Ferner erhält der Bediener mittels der Funkschnittstellen 36 eine Rückmeldung auf das externe Gerät 38 über den aktuell eingestellten Lademodus, die oben erwähnten Ladeparameter L_{P} und/oder den Gesundheitszustand SoH des Wechselakkupacks 12.

Die Ausgabeeinheit 32 des Ladegeräts umfasst weiterhin eine Ladezustandsanzeige 40, die in mehrere Anzeigesegmente für unterschiedliche Ladezustandsbereiche (z.B. <= 20 %, <= 40 %, <= 60 %, <= 80 %, <= 100 %) aufgeteilt ist. Somit kann der Bediener schnell und einfach den Ladezustand des eingesteckten Wechselakkupacks 12 erkennen. Die Ladezustandsanzeige 40 kann derart ausgebildet sein, dass jeweils sämtliche Segmente zur Anzeige des aktuell eingestellten Lademodus herangezogen werden. Alternativ ist es aber auch denkbar, dass sich die Segmente immer auf den Vollladezustand des zu ladenden Wechselakkupacks 12 beziehen, wobei das Ende eines Ladevorgangs des aktuell eingestellten Lademodus dann beispielsweise durch ein Blinken oder eine andere Farbe einzelner oder mehrerer Segmente bis zur aktuellen Ladegrenze angezeigt wird. Über eine Statusanzeige 42 der Ausgabeeinheit 32 kann das Ladegerät 10 dem Bediener etwaige Fehler im Ladegerät 10 und/oder im Wechselakkupack 12, wie zum Beispiel eine Übertemperatur, einen kritischen Abbruch des Ladevorgangs oder einen kritischen Gesundheitszustand des Wechselakkupacks 12 signalisieren. Die Ausgabeeinheit 32 kann durch ein- oder mehrfarbige LED, durch LCD- bzw. OLED-Elemente, durch ePaper oder dergleichen realisiert sein. Ergänzend oder alternativ können einzelne oder alle Ausgabeeinheiten 32 auch als akustische und/oder haptische Signalgeber umgesetzt sein. Dabei kommt als akustischer Signalgeber beispielsweise ein Lautsprecher, insbesondere Piezo-Lautsprecher, und als haptischer Signalgeber ein Vibrationsgeber in Gestalt eines Elektromotors mit durch diesen angetriebener Unwuchtscheibe, in Frage.

Ist ein Wechselakkupack 12 mit seiner elektromechanischen Schnittstelle 16 in die elektromechanische Schnittstelle 22 des Ladegeräts 10 eingeschoben, startet das Ladegerät 10 den Aufladevorgang automatisch mit dem Einschieben eines Netzsteckers 44 des Ladegeräts 10 in eine nicht gezeigte Steckdose. Ebenso kann der Ladevorgang bei eingesteckten Netzstecker 44 durch das Einschieben des Wechselakkupacks 12 in das Ladegerät 10 und/oder nach Betätigung der Bedieneinheit 24 gestartet werden. Der Ladevorgang wird regulär beendet, wenn der Wechselakkupack 12 vollgeladen ist und/oder der Bediener den Wechselakkupack 12 aus dem Ladegerät 10 entnimmt. Zudem beendet das Ladegerät 10 den Aufladevorgang im Falle eines detektierten Fehlers oder bei Erreichen eines kritischen Gesundheitszustands des Wechselakkupacks 12. Ein Zurücksetzen des Ladegeräts 10 in einen Werkszustand ist mittels der Funkschnittstelle 36 und/oder der Bedieneinheit 24 möglich. Dazu weist die Steuer- oder Regelelektronik 26 eine entsprechende Zurücksetz- bzw. Reset-Funktion auf.

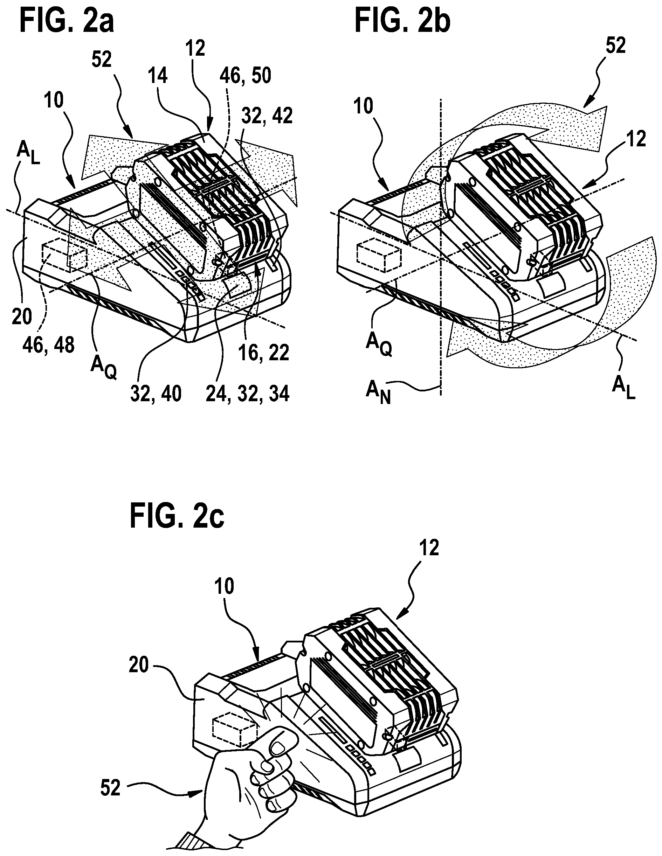

Figur 2 zeigt ein erstes Ausführungsbeispiel des erfindungsgemäßen Ladegeräts 10 mit dem Gehäuse 20, in dessen elektromechanische Schnittstelle 22 (vgl. Figur 1) der Wechselakkupack 12 eingeschoben ist. Das Ladegerät 10 weist im Wesentlichen die gleichen Baugruppen des in Figur 1 gezeigten Ladegeräts 10 auf, wobei der Übersichtlichkeit halber auf die Darstellung und Kennzeichnung einiger dieser Baugruppen verzichtet wurde. Ebenso wurde darauf verzichtet, in allen Teilbildern von Figur 2 die entsprechenden Elemente und Baugruppen zu kennzeichnen. In dem Gehäuse 20 des Ladegeräts 10 ist neben der Steuer- und Regelelektronik 26, der Leistungselektronik 28 und ggf. dem Lüfter 30 eine Sensoreinheit 46 zur Erfassung einer Bewegung und/oder Lage des Ladegeräts 10 und/oder einer auf das Ladegerät 10 ausgeübten Kraft aufgenommen. In Abhängigkeit von der durch die Sensoreinheit 46 erfassten Bewegung, Lage und/oder Kraft kann die Steuer- oder Regelelektronik 26 den Ladevorgang und/oder die das Display 34, die Ladezustandsanzeige 40 und die Statusanzeige 42 umfassende Ausgabeeinheit 32 beeinflussen. Wie bereits zu Figur 1 erwähnt, kann die Ausgabeeinheit 32 ergänzend oder alternativ auch durch akustische und/oder haptische Signalgeber umgesetzt sein.

Die Sensoreinheit 46 kann einen oder mehrere Sensoren aufweisen, die je nach Anforderung an unterschiedlichen Stellen im Gehäuse 20 des Ladegeräts 10 angeordnet sind. So sind im gezeigten Ausführungsbespiel im hinteren Teil des Gehäuses 20 ein Lage- und/oder Beschleunigungssensor 48 und unmittelbar unter der elektromechanischen Schnittstelle 22 ein Kraftsensor 50 angeordnet. Mittels des Lage- und/oder Beschleunigungssensor 48 ist es möglich, unterschiedliche Bewegungsmuster 52, wie sie in Figur 2a bis 2c dargestellt sind, zu erkennen und in Abhängigkeit der erkannten Bewegungsmuster 52 unterschiedliche Ladeparameter L_{P}, wie z.B. die Ladedauer, die Ladeleistung, den Lademodus, die Ladeobergrenze, die Entladeuntergrenze oder dergleichen zu verändern und/oder über die Ausgabeeinheit 32 anzuzeigen. Ebenso kann der Gesundheitszustand SoH des Akkupacks 12 angezeigt werden. Mittels des Kraftsensors 50 kann alternativ oder ergänzend eine Kraft durch den in die elektromechanische Schnittstelle 22 des Ladegeräts 10 eingeschobenen Akkupacks 12 erfasst werden.

Gemäß Figur 2a ist das Bewegungsmuster 52 als eine lineare Bewegung entlang einer Längsachse A_{L} oder einer Querachse A_{Q} des Ladegeräts 10 ausgebildet. So kann beispielsweise durch ein jeweils mindestens zweisekündig anhaltendes Hin- und Herverschieben des auf einer Abstellfläche stehenden Ladegeräts 10 entlang der Längsachse A_{L} der Lademodus zyklisch verändert und entsprechend über die Anzeige 34 der Ausgabeeinheit 32 angezeigt werden, während ein kurzes, ruckartiges Hin- und Herverschieben entlang der Querachse A_{Q} die zyklische Anzeige unterschiedlicher Ladeparameter, wie den eingestellten Lademodus, den aktuellen Ladezustand, den aktuellen Ladestrom, die aktuelle Temperatur, den SoH oder dergleichen über die Ausgabeeinheit 32 bewirkt. Ergänzend kann zudem vorgesehen sein, dass ein beliebiges Bewegungsmuster und/oder eine durch den Kraftsensor 50 erfasste Kraft das Ladegerät 10 aus einem Standby-Zustand bzw. Ruhebetreib aufweckt, um z.B. die Ausgabeeinheit 32 zu aktivieren. Bei Überschreiten eines ersten Schwellwertes S₁ durch die erfasste Bewegung und/oder bei Unterschreiten eines zweiten Schwellwertes S₂ durch die erfasste Kraft wird der Ladevorgang durch die Steuer- oder Regelelektronik 26 beendet, unterbrochen oder reduziert. Beispielsweise kann der Ladvorgang beendet oder unterbrochen werden, wenn das Ladegerät 10 durch den Bediener aufgenommen bzw. angehoben wird und der Akkupack 12 noch in der elektromechanischen Schnittstelle 22 eingeschoben ist, weil in diesem Fall durch die erfasste Bewegung der erste Schwellwert S₁ überschritten wird. Ebenso ist ein Beenden oder Unterbrechen des Ladevorgangs möglich, wenn das Ladegerät 10 am Akkupack 12 angehoben wird, weil dann der zweite Schwellwert S₂ durch die erfasste Kraft unterschritten und der erste Schwellwert S₁ durch die erfasste Bewegung überschritten wird. Ergänzend oder alternativ kann zunächst eine Reduzierung der Ladeleistung bewirkt werden, um dem Ladevorgang zu unterbrechen oder zu beenden, wenn sich am Überschreiten des ersten Schwellwertes S₁ und/oder am Unterschreiten des zweiten Schwellwertes S₂ innerhalb eines definierten Zeitfensters P von beispielsweise 10 Sekunden keine Veränderung ergeben hat.

In Figur 2b ist ein weiteres Bewegungsmuster 52 dargestellt, das ergänzend oder alternativ zum Bewegungsmuster 52 gemäß Figur 2a genutzt werden kann. So können hier durch ein Rollen bzw. Wanken um die Längsachse A_{L}, ein Nicken um die Querachse A_{Q} und/oder ein Gieren um eine Hochachse A_{H} unterschiedliche Ladeparameter L_{P} gesteuert und/oder angezeigt werden. Ebenso ist denkbar, dass zwei unterschiedliche Schwenkbewegungen zum Erhöhen und Reduzieren des gleichen Ladeparameters L_{P} nutzbar sind. Auch kann vorgesehen sein, dass die Steuer- oder Regelelektronik 26 die Anzahl gleichartiger Bewegungsmuster 52 innerhalb des Zeitfensters P erfasst, um einen bestimmten Ladeparameter L_{P} in Abhängigkeit von der erfassten Anzahl stufenweise zu erhöhen und über die Ausgabeeinheit 32, insbesondere die Ladezustandsanzeige 40, anzuzeigen. Erfolgt das gleichartige Bewegungsmuster 52 nach Ablauf des Zeitfensters P, wird die Anzahl und demzufolge auch der zugehörige Ladeparameter L_{P} wieder reduziert. Alternativ kann auch vorgesehen sein, dass dann ein anderer Ladeparameter L_{P} verändert wird oder lediglich eine erneute Anzeige des zuletzt eingestellten Werts erfolgt.

In Figur 2c ist ein viertes Bewegungsmuster 52 in Form eines Klopfens mit dem Finger einer Hand des Bedieners auf das Gehäuse 20 des Ladegeräts 10 dargestellt. Hierdurch lassen sich entweder die in den Figuren 2a und 2b beschriebenen Ereignisse auslösen oder andere Ladeparameter L_{P} steuern. Die in den Figuren 2a, 2b und 2c beschriebenen Bewegungsmuster 52 können somit kombiniert werden, um eine größtmögliche Flexibilität bei der Steuerung der Ladeparameter L_{P} zu erzielen.

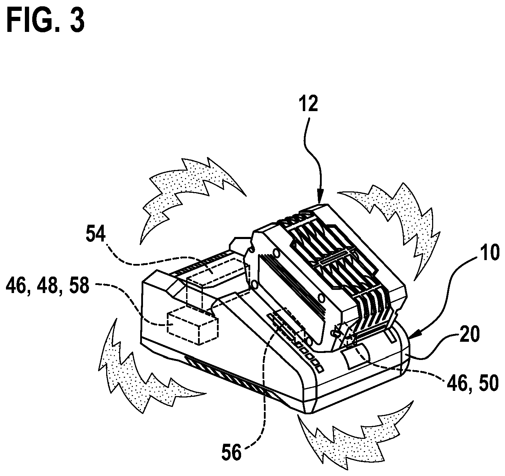

Figur 3 zeigt eine weitere mittels des Lage- und/oder Beschleunigungssensors 48 erfassbare Bewegung in Form einer unregelmäßigen Erschütterung in allen möglichen Richtungen. Bei Überschreiten eines dritten Schwellwertes S₃ durch die erfasste Beschleunigung legt die Steuer- oder Regelelektronik 26 die erfasste Beschleunigung des Ladegeräts 10 beispielsweise als ein Histogramm ihrer Amplituden in einem nichtflüchtigen Speicher ab und löst ggf. ergänzend einen im Gehäuse 20 des Ladegeräts 10 untergebrachten Aktor 54 aus. Der Aktor 54 kann als ein Airbag, ein Fallschirm oder dergleichen zur Milderung etwaiger Auswirkungen eines Sturzes ausgebildet sein. Auf diese Weise ergibt sich ein wirksamer Schutz des Ladegeräts 10 und des ggf. eingeschobenen Akkupacks 12 vor Beschädigungen. Ergänzend oder alternativ kann die Steuer- oder Regelelektronik 26 beim Überschreiten des dritten Schwellwerts S₃ einen weiteren Aktor 56 in der elektromechanischen Schnittstelle 22 auslösen, der den eingeschobenen Akkupack 12 aus der elektromechanischen Schnittstelle 22 ausrückt. Durch dieses mechanische Trennen von Akkupack 12 und Ladegerät 10 bietet sich ein zusätzlicher Schutz im Falle eines Sturzes oder ähnlichen Ereignisse.

Ist der Lage- und/oder Beschleunigungssensor 48 als ein triaxialer Beschleunigungssensor ausgebildet, kann mit der Steuer- oder Regelelektronik 26 zudem ein freier Fall und ggf. dessen Dauer zur Berechnung und Speicherung der Fallhöhe erfasst werden. Ebenfalls ist es möglich, durch eine mathematische Integration des Beschleunigungssignals eine Entfernung zu erfassen, einen Aufprall zu detektieren sowie dessen Stärke (in g oder m/s²) auszumessen und zu speichern. Bei der Verwendung eines Drucksensors 58 kann der Aufprall ergänzend oder alternativ durch die entstehende Druckwelle detektiert werden. Auch akustische Sensoren zur Aufpralldetektion sind denkbar. Die Speicherung der Beschleunigungsdaten ermöglicht eine spätere Analyse derartiger Ereignisse zu Servicezwecken. Des Weiteren können die mechanischen Schwingungen, die auf das Ladegerät 10 eingewirkt haben, aufgezeichnet werden, um einen Aufschluss über den mechanischen Stress zu erhalten, dem es ausgesetzt war. Mit Hilfe der gespeicherten Daten lassen sich die Ereignisse zählen und als Garantie- oder Servicefälle ermitteln. Darüber hinaus kann ein Bediener bei einer fehlerhaften Nutzung des Ladegeräts, wie beispielsweise einem Laden in einem Fahrzeug während der Fahrt und einer damit verbundenen hohen und anhaltenden Vibrationsbelastung, die zu Schäden an den elektrischen Kontaktelementen 18 durch Abrasion führen können, gewarnt werden. In diesem Fall beendet die Steuer- oder Regelelektronik 26 den Ladevorgang oder reduziert ihn zumindest. Mittels entsprechender RF-MEMS-Sensoren lassen sich immanente Frequenzen, wie sie beispielsweise durch schwingende Trafo- oder Drosselspulen, Lüfter etc. entstehen, detektieren und ausfiltern, um etwaige technisch bedingte Umwelteinflüsse von den vom Bediener ausgelösten Bewegungsmustern und/oder Erschütterung zu unterscheiden.

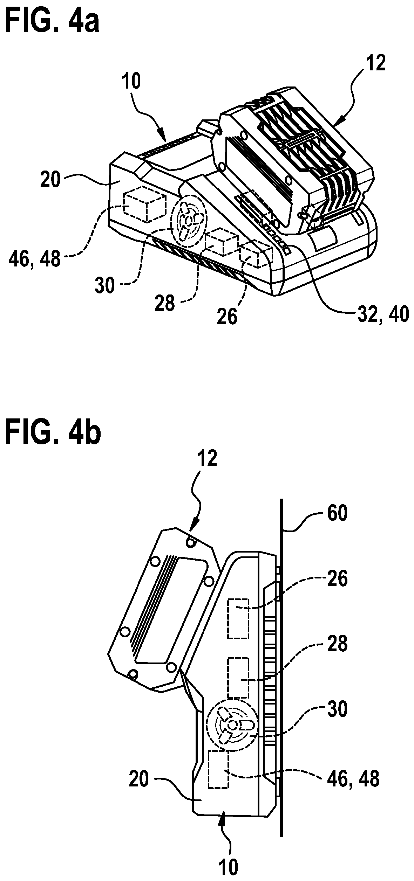

In Figur 4 ist ein weiteres Ausführungsbeispiel für eine Anwendung des Lage- und/oder Beschleunigungssensors 48 des erfindungsgemäßen Ladegeräts 10 mit eingeschobenem Akkupack 12 in Verbindung mit dem Lüfter 30 zur Kühlung der Leistungselektronik 28, der Steuer- oder Regelelektronik 26 und ggf. des eingeschobenen Akkupacks 12 gezeigt. Die Steuer- oder Regelelektronik 26 steuert den Lüfter 30 in Abhängigkeit der mittels des Lage- und/oder Beschleunigungssensors 48 erfassten Lage des Ladegeräts 10 derart an, dass in einer standardmäßig horizontalen Lage des Ladegeräts 10 gemäß Figur 4a eine Standard-Lüftung und in einer davon abweichenden Lage gemäß Figur 4b, beispielsweise senkrecht an einer entsprechend angeordneten Fläche 60 wie einer Wand oder einem Regal montiert, eine gegenüber der Standard-Lüftung verstärkte Lüftung umgesetzt wird. Dies ermöglicht eine optimierte Kühlung in Abhängigkeit von der Lage des Ladegeräts 10 und verhindert eine Überhitzung, um die Lebensdauer des Ladegeräts 10 und ggf. des eingeschobenen Akkupacks 12 zu erhöhen. Selbstverständlich sind auch hiervon abweichende Ansteuerungen des Lüfters 30 bzw. einer Mehrzahl von Lüftern 30 je nach Kühlungstopologie innerhalb des Ladegeräts 10 denkbar. Zudem ist es ergänzend möglich, einen Verschmutzungsgrad innerhalb des Ladegeräts 10 durch einen nicht gezeigten Feinstaubsensor der Sensoreinheit 46 zu erfassen und mittels der Steuer- oder Regelelektronik 26 zu überprüfen. Die Verwendung fluidscher MEMS-Sensoren ermöglicht es darüber hinaus, dass die Steuer- oder Regelelektronik 26 eine durch den bzw. die Lüfter 30 erzeugten Luftfluss innerhalb des Gehäuses 20 des Ladegeräts 10 für verschiedene Funktionen, wie eine reine Elektronikkühlung, eine reine Akkukühlung oder eine Kombination aus beidem regelt und/oder überwacht.

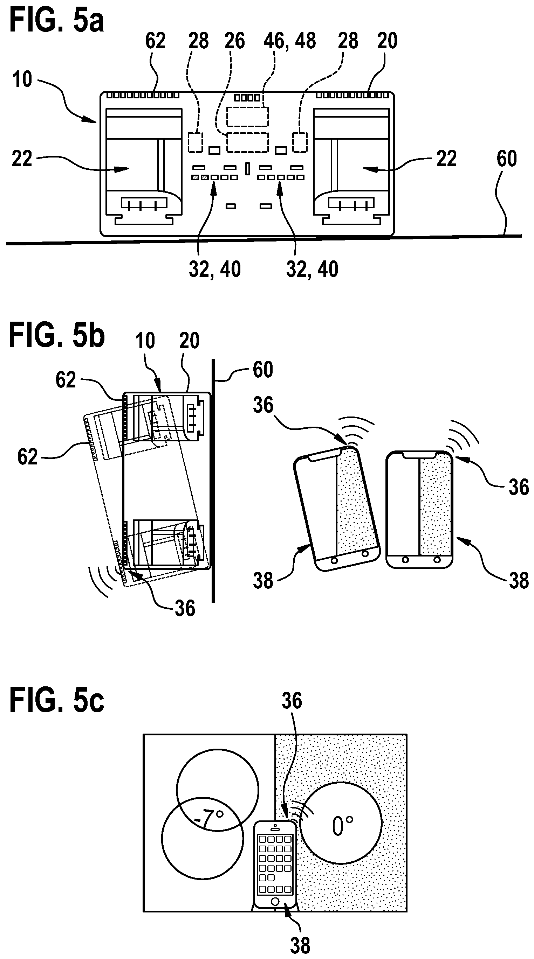

Eine weitere Anwendungsmöglichkeit für den Lage- und/oder Beschleunigungssensor 48 ist in Figur 5 gezeigt. Das Ladegerät 10 ist hier als ein so genannter Multi-Bay-Lader mit zwei elektromechanischen Schnittstellen 22 zum gleichzeitigen oder sequenziellen Laden zweier Akkupacks 12 ausgebildet. Für jeden Akkupack umfasst die Ausgabeeinheit 32 eine Ladezustandsanzeige 40 mit jeweils einer Mehrzahl optischer Segmente in Form einzelner LED-Streifen, die parallel zu einer Außenkante 62 des Gehäuses 20 angeordnet sind. Wird das Ladegerät 10 gemäß Figur 5a mit der Außenkante 62 bzw. einer parallel dazu angeordneten Außenkante auf die Fläche 60 abgelegt, kann durch den Bediener ein Wasserwaagen-Modus aktiviert werden, in dem die Steuer- oder Regelelektronik 26 die Segmente derart ansteuern, dass die Lage des Ladegeräts 10 in Form einer digitalen Wasserwaage anzeigbar ist. Sprich, befindet sich das Ladegerät 10 mit seiner Außenkante "im Wasser", leuchten alle Segmente beider Ladezustandsanzeigen 40 auf. Befindet sich das Ladegerät 10 "außer Wasser", leuchten je nach Fehlstellung nur die äußeren Segmente derjenigen Ladezustandsanzeige 40 auf, deren Seite des Ladegeräts 10 abgesenkt werden muss, um die Außenkante 62 "ins Wasser" zu bringen. Jedes einzelne Segment kann hier beispielsweise einen Winkel von einem Grad entsprechen. Selbstverständlich sind auch hiervon abweichende Beleuchtungsszenarien zur Anzeige der digitalen Wasserwaage denkbar. Ebenso kann dieses Prinzip auf ein Ladegerät 10 zum Laden nur eines einzigen Akkupacks 12 und demzufolge nur einer Ladezustandsanzeige 40 angewendet werden.

Gemäß dem Ausführungsbeispiel nach den Figuren 5b und 5c ist das Ladegerät 10 über die Funkschnittstelle 36 mit dem als Smartphone ausgebildeten, externen Gerät 38 verbunden. Dabei ist vorgesehen, dass die Steuer- oder Regelelektronik 26 in Abhängigkeit von der mittels des Lage- oder Beschleunigungssensors 48 erfassten Bewegungsmusters 52 (vgl. Figur 2) einen Kommunikationsvorgang der Funkschnittstelle 36 mit dem externen Gerät 38 steuert. Alternativ kann der Kommunikationsvorgang auch manuell vom Bediener durch eine Betätigung der Bedieneinheit 24 gestartet und beendet werden. Mittels einer auf dem externen Gerät 38 installierten App ist es dem Bediener nun möglich, die digitale Wasserwaagen-Funktion des Ladegeräts 10 mit einer größeren Distanz und ggf. einer genaueren Anzeige als über die Ladezustandsanzeige 40 zu nutzen. In Figur 5b ist ein Beispiel zur Anzeige einer im Wesentlichen senkrecht angeordneten Fläche 60 über die App dargestellt, während Figur 5c eine Draufsicht zur Anzeige einer im Wesentlichen waagerechten Ausrichtung des Ladegeräts 10 auf einer entsprechenden Fläche 60 zeigt. Da dem Fachmann derartige Apps zur Anzeige digitaler Wasserwaagen hinlänglich bekannt sind, soll hierauf nicht weiter im Detail eingegangen werden. Neben diesen Funktionen kann die App selbstverständlich auch zur Anzeige und Einstellung der Ladeparameter L_{P} genutzt werden. Auch kann die App Benachrichtigungen beispielsweise bei einer Entnahme des Akkupacks 12, bei starker Vibrationsbelastung, bei einem drohenden Abbruch des Ladevorgangs, bei einem Sturz oder bei einem Diebstahl des Ladegeräts 10 erzeugen und dem Bediener des externen Geräts 38 anzeigen.

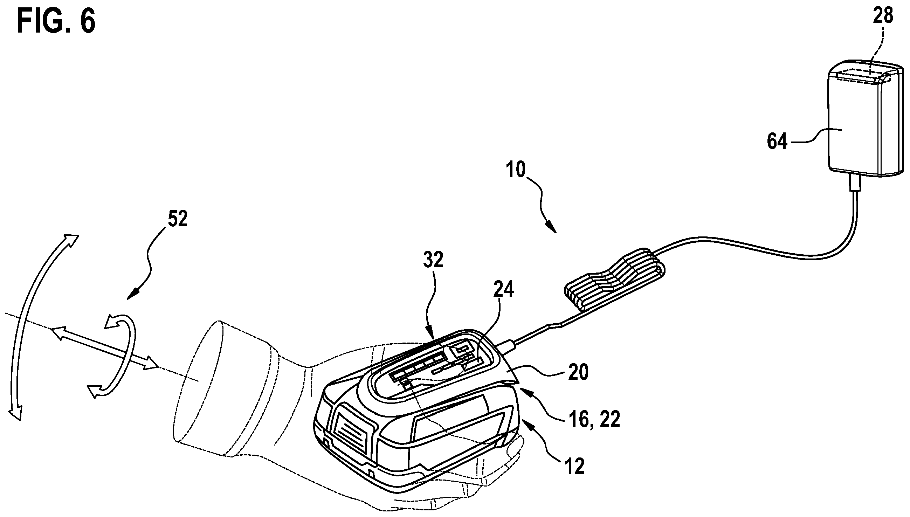

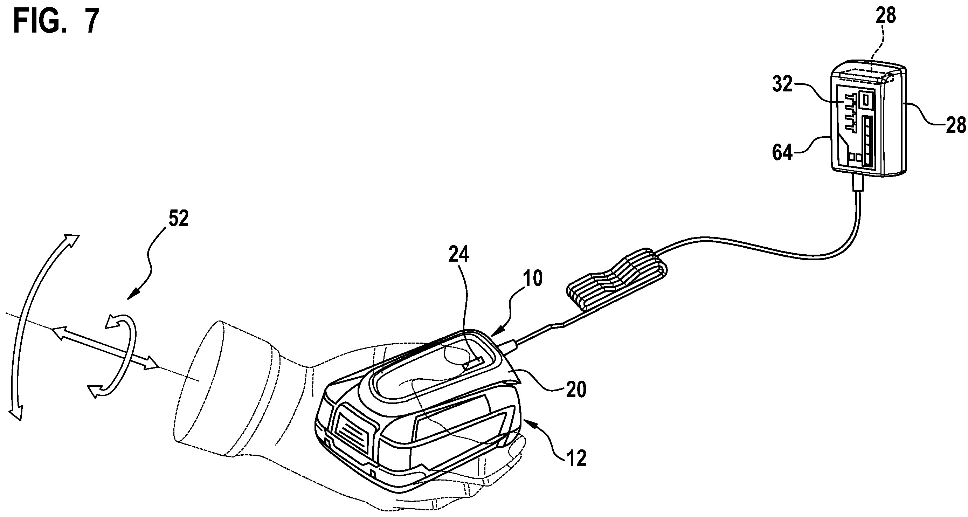

In den Figuren 6 und 7 sind zwei weitere Ausführungsbeispiele der Erfindung für das als Cradle-Lader ausgebildete Ladegerät 10 dargestellt. Ein Cradle-Lader zeichnet sich dadurch aus, dass er besonders kompakt aufgebaut ist und mit der an seinem Gehäuse 20 angeordneten elektromechanischen Schnittstelle 22 in die elektromechanische Schnittstelle 16 des Akkupacks 12 einschiebbar ist, ohne dabei das Volumen des Akkupacks 12 signifikant zu vergrößern. Dadurch lässt sich ein Cradle-Lader samt eingeschobenem Akkupack 12 sehr gut in die Hand nehmen. Zudem weist er bevorzugt eine Zweiteilung derart auf, dass die Leistungselektronik 28 getrennt von der Steuer- oder Regelelektronik 26 in einem separaten Steckergehäuse 64 untergebracht ist. Aufgrund der beschränkten Ladeleistung kann bei einem Cradle-Lader in der Regel auf eine aktive Kühlung verzichtet werden. Durch die bereits mit Bezug auf die Figuren 2 und 3 beschriebenen Bewegungsmuster 52 des zusammen mit dem Akkupack 12 in der Hand gehaltenen Cradle-Laders können die diversen Ladeparameter L_{P} in der zuvor beschriebenen Art und Weise verändert und/oder über die Ausgabeeinheit 32 angezeigt werden. Ebenso ist eine Verwendung als digitale Wasserwage, wie zu den Figuren 4 und 5 beschrieben, denkbar. Die beiden Ausführungsbeispiele gemäß der Figuren 6 und 7 unterscheiden sich dadurch, dass in Figur 6 die Ausgabeeinheit 32 und die Bedieneinheit 24 im Gehäuse 20 und in Figur 7 zumindest die Ausgabeeinheit 32 im Steckergehäuse 64 untergebracht sind.

Es sei abschließend darauf hingewiesen, dass die gezeigten Ausführungsbeispiele weder auf die in den Figuren 1 bis 7 gezeigten Ausführungsformen der Ladegeräte 10 noch auf die beschriebenen Sensor-, Anzeige- und Bedienelemente beschränkt sind. So können zumindest Teilaspekte der Erfindung beispielsweise auch für größere Multi-Bay-Lader oder für Kofferladegeräte zur Anwendung kommen.

## Patentansprüche

1. Ladegerät (10) zur Ladung mindestens eines wiederaufladbaren Energiespeichers (12), mit einem Gehäuse (20), in dem eine Steuer- oder Regelelektronik (26) zur Steuerung oder Regelung eines Ladevorgangs des wiederaufladbaren Energiespeichers (12) und eine Ausgabeeinheit (32) zur haptischen, akustischen und/oder optischen Anzeige zumindest eines Ladeparameters (L_{P}) des Ladevorgangs aufgenommen sind, **dadurch gekennzeichnet, dass** in dem Gehäuse (20) eine Sensoreinheit (46) zur Erfassung einer Bewegung und/oder Lage des Ladegeräts (10) und/oder einer auf das Ladegerät (10) ausgeübten Kraft aufgenommen ist, wobei die Steuer- oder Regelelektronik (26) den Ladevorgang und/oder die Ausgabeeinheit (32) in Abhängigkeit von der durch die Sensoreinheit (46) erfassten Bewegung, Lage und/oder Kraft beeinflusst.

2. Ladegerät (10) nach Anspruch 1, **dadurch gekennzeichnet, dass** der zumindest eine Ladeparameter (L_{P}) eine Ladedauer, eine Ladeleistung, ein Lademodus, eine Ladeobergrenze oder eine Entladeuntergrenze ist.

3. Ladegerät (10) nach einem der vorhergehenden Ansprüche, **dadurch gekennzeichnet, dass** die Sensoreinheit (46) zumindest einen Lage- und/oder Beschleunigungssensor (48) und/oder einen Kraftsensor (50) aufweist.

4. Ladegerät (10) nach einem der vorhergehenden Ansprüche, **dadurch gekennzeichnet, dass** die erfasste Bewegung ein definiertes Bewegungsmuster (52) oder eine Erschütterung des Ladegeräts (10) umfasst.

5. Ladegerät (10) nach Anspruch 4, **dadurch gekennzeichnet, dass** in Abhängigkeit vom Bewegungsmuster (52) unterschiedliche Ladeparameter (L_{P}) veränderbar und/oder anzeigbar sind.

6. Ladegerät (10) nach einem der vorherigen Ansprüche 4 oder 5, **dadurch gekennzeichnet, dass** die Steuer- oder Regelelektronik (26) die Anzahl gleichartiger Bewegungsmuster (52) erfasst, um den zumindest einen Ladeparameter (L_{P}) des Ladevorgangs in Abhängigkeit von der erfassten Anzahl stufenweise zu ändern und über die Ausgabeeinheit (32) anzuzeigen.

7. Ladegerät (10) nach einem der vorherigen Ansprüche 4 bis 6, **dadurch gekennzeichnet, dass** mittels der Steuer- oder Regelelektronik (26) ein Zeitfenster (P) derart definierbar ist, dass gleichartige Bewegungsmuster innerhalb des Zeitfensters (P) eine Erhöhung ihrer Anzahl und außerhalb des Zeitfensters (P) eine Reduzierung ihrer Anzahl oder die Veränderung eines anderen Ladeparameters (L_{P}) bewirken.

8. Ladegerät (10) nach einem der vorhergehenden Ansprüche, **dadurch gekennzeichnet, dass** die erfasste Kraft durch den zumindest einen in eine elektromechanische Schnittstelle (22) des Ladegeräts (10) eingesteckten Energiespeicher (12) erzeugt ist.

9. Ladegerät (10) nach einem der vorherigen Ansprüche, **dadurch gekennzeichnet, dass** die Steuer- oder Regelelektronik (26) in Abhängigkeit von der erfassten Bewegung und/oder Kraft einen Aufweckvorgang des Ladegeräts (10) aus dem Ruhebetrieb startet.

10. Ladegerät (10) nach einem der vorherigen Ansprüche, **dadurch gekennzeichnet, dass** die Steuer- oder Regelelektronik (26) bei Überschreiten eines ersten Schwellwertes (S₁) durch die erfasste Bewegung und/oder bei Unterschreiten eines zweiten Schwellwertes (S₂) durch die erfasste Kraft den Ladevorgang beendet, unterbricht oder reduziert.

11. Ladegerät (10) nach einem der vorherigen Ansprüche, **dadurch gekennzeichnet, dass** die als optische Anzeige ausgebildete Ausgabeeinheit (32) eine Mehrzahl optischer Segmente umfasst, die parallel zu zumindest einer Außenkante (62) des Gehäuses (20) angeordnet sind, wobei die Steuer- oder Regelelektronik (26) die Segmente derart ansteuert, dass die Lage des Ladegeräts (10) in Form einer digitalen Wasserwaage anzeigbar ist.

12. Ladegerät (10) nach einem der vorherigen Ansprüche, **dadurch gekennzeichnet, dass** das Lagegerät (10) eine Funkschnittstelle (36) zur Datenkommunikation mit einem externen Gerät (38) aufweist, wobei die Steuer- oder Regelelektronik (26) in Abhängigkeit von der erfassten Bewegung und/oder Kraft einen Kommunikationsvorgang der Funkschnittstelle (36) mit dem externen Gerät (38) steuert.

13. Ladegerät (10) nach einem der vorherigen Ansprüche, **dadurch gekennzeichnet, dass** die Steuer- oder Regelelektronik (26) mittels der Sensoreinheit (46) eine Beschleunigung des Ladegeräts (10) erfasst und im Falle des Überschreitens eines dritten Schwellwertes (S₃) in einem nichtflüchtigen Speicher ablegt und/oder einen Aktor (54) zum Schutz des Ladegeräts (10) auslöst.

14. Ladegerät (10) nach einem der vorhergehenden Ansprüche 8 und 13, **dadurch gekennzeichnet, dass** die elektromechanische Schnittstelle (22) einen Aktor (56) aufweist, der den zumindest einen eingeschobenen Energiespeicher (12) im Falle des Überschreitens des dritten Schwellwerts (S₃) aus der elektromechanischen Schnittstelle (22) ausrückt.

15. Ladegerät (10) nach einem der vorherigen Ansprüche, **dadurch gekennzeichnet, dass** in dem Gehäuse (20) ein Lüfter (30) zur Kühlung zumindest einer Leistungselektronik (28) angeordnet ist, wobei die Steuer- oder Regelelektronik (26) den Lüfter (30) in Abhängigkeit von einer erfassten Lage und/oder Bewegung des Ladegeräts (10) ansteuert.
